# EUROPÄISCHE PATENTSCHRIFT

(11) **EP 0 320 664 B1**
(45) Veröffentlichungstag und Bekanntmachung des Hinweises auf die Patenterteilung: **29.09.1993**
(21) Anmeldenummer: 88119415.3
(22) Anmeldetag: 22.11.1988
(51) Int. Cl.: H04N 7/00

(54) **Integrierbare Schaltungsanordnung zur Abtrennung von Farbbildaustastsynchron-Signalanteilen**
Integrated-circuit arrangement for the separation of composite colour signal parts
Configuration de circuit intégré pour la séparation de parties du signal complet en couleur

(30) Priorität: 14.12.1987 DE 3742360
(43) Veröffentlichungstag der Anmeldung: 21.06.1989
(73) Patentinhaber: SIEMENS AKTIENGESELLSCHAFT, 80333 München (DE)
(72) Erfinder: Kreuzpointner, Georg, D-8059 Schwaig (DE); Meindl, Xaver, Dipl.-Ing., D-8080 Fürstenfeldbruck (DE)

(56) Entgegenhaltungen:
- EP-A- 0 124 422
- EP-A- 0 188 221
- FUNK TECHNIK, Band 40, Nr. 6, Juni 1985, Seite 240, Heidelberg, DE; "Schaltung eines Datenzeilenempfängers für VPS"

## Beschreibung

Die Erfindung betrifft eine integrierbare Schaltungsanordnung zur Abtrennung des Synchrongemisches und der Videoprogrammsystem(VPS)-Daten aus einem Farbbildaustastsynchron(FBAS)-Signal nach dem Oberbegriff des Patentanspruchs 1.

Ein zur Fernseh-Bildübertragung verwendetes Farbbildaustastsynchron(FBAS)-Signal setzt sich zusammen aus mindestens einem Synchronimpuls bzw. Synchrongemisch zur Synchronisierung der Sende- bzw. Empfangsseite, einem Farbburst als Referenz für die Dekodierung der Farbinformation des Bildes und der Bildinformation. In der Zeile 16 der Bildinformation des FBAS-Signals wird u.a. ein Code für die Fernsteuerung eines Videorecorders in Form der Videoprogrammsystem(VPS)-Daten übertragen. Dieser Code enthält Angaben über das Datum, d.h. Tag und Monat, die Stunden und Minuten, die Programmquelle und den Tonstatus, z.B. Mono oder Stereo.

Um die in dem FBAS-Signal enthaltenen Informationen korrekt weiterverarbeiten zu können, ist eine Signalabtrennung der einzelnen Informationen erforderlich. Schaltungstechnisch bedeutet das, daß das FBAS-Signal zunächst mit Hilfe einer Klemmschaltung auf einen einheitlichen Signalpegel bezogen werden muß und daß dann mit Hilfe mindestens eines Komparators die eigentliche Signaltrennung erfolgt. Da die zu Digitalpegeln aufbereiteten abgetrennten Signalinformationen logisch aufwendig weiterverarbeitet werden müssen, kommt der Gewinnung des Klemmpegels und der verschiedenen Trennpegel besondere Bedeutung zu.

Eine Abtrennung des Synchrongemisches und der VPS-Daten in der Fernsehzeile 16 aus dem FBAS-Signal wurde bisher im Rahmen eines 2-Chip-Systems mit einem analogen integrierten Schaltkreis realisiert, der unter dem Namen Videoprozessor oder Dataslicer bekannt ist. Gängige Videoprozessortypen sind z.B. der Baustein SAA 5230 der Fa. Valvo oder der Baustein SL 9100 der Fa. Plessey.

Unter wirtschaftlichen Aspekten sind für die logisch aufwendige Weiterverarbeitung der abgetrennten digitalen Signalinformationen nur Very Large Scale Integrated (VLSI)-Technologien, z.B. CMOS- oder einkanalige MOS-Technologien sinnvoll.

Der Erfindung liegt die Aufgabe zugrunde, eine integrationsgerechte MOS-Schaltung zur Abtrennung des Synchrongemisches und der Videoprogrammsystem(VPS)-Daten in der Fernsehzeile 16 aus dem Farbbildaustastsynchron(FBAS)-Signal anzugeben, so daß trotz Schwankungen fertigungsbedingter Technologieparameter hohe Ausbeutequoten garantiert und eine Massenfertigung ermöglicht wird.

Diese Aufgabe wird bei einer Schaltungsanordnung der eingangs genannten Art erfindungsgemäß durch die Merkmale des kennzeichnenden Teils des Patentanspruchs 1 gelöst.

Die erfindungsgemäße Schaltungsanordnung besitzt den Vorteil, daß sie sich in gleicher Technologieart wie die digitale Auswertelogik für die abgetrennten Signalinformationen realisieren läßt und sich somit leicht 1-Chip-Systeme mit geringem externen Schaltungsaufwand herstellen lassen. Darüberhinaus bietet die erfindungsgemäße Schaltungsanordnung den Vorteil, daß sich integrierte MOS-Schaltkreise mit sehr geringem Verlustleistungsbedarf herstellen lassen.

Weitere Ausgestaltungen der Erfindung sind in Unteransprüchen gekennzeichnet.

Die Erfindung wird im folgenden anhand von in den Figuren der Zeichnung dargestellten Ausführungsbeispielen näher erläutert. Dabei sind gleiche Elemente mit gleichen Bezugszeichen versehen.

Es zeigt:
- FIG. 1: ein Ausführungsbeispiel einer als Teilschaltung ausgebildeten erfindungsgemäßen Klemmschaltung,
- FIG 2: ein Ausführungsbeispiel einer erfindungsgemäßen Schaltungsanordnung mit einer detaillierten Teilschaltung einer Klemmschaltung und einer Abtrennschaltung für die Synchronimpulse,
- FIG 3: charakteristische Signale der Teilschaltung gemäß FIG 2,
- FIG 4: ein Ausführungsbeispiel einer detaillierten Teilschaltung zur Abtrennung der digitalen VPS-Daten gemäß der Erfindung und
- FIG 5: charakteristische Signale der Teilschaltung gemäß FIG 4.

Ein in eine gattungsgemäße Schaltungsanordnung vorzugsweise kapazitiv eingekoppeltes Farbbildaustastsynchron(FBAS)-Signal muß zunächst auf einen festen Bezugspegel geklemmt, d.h. bezogen werden, da sonst die Festlegung von Abtrennpegeln für Signalanteile sinnlos ist.

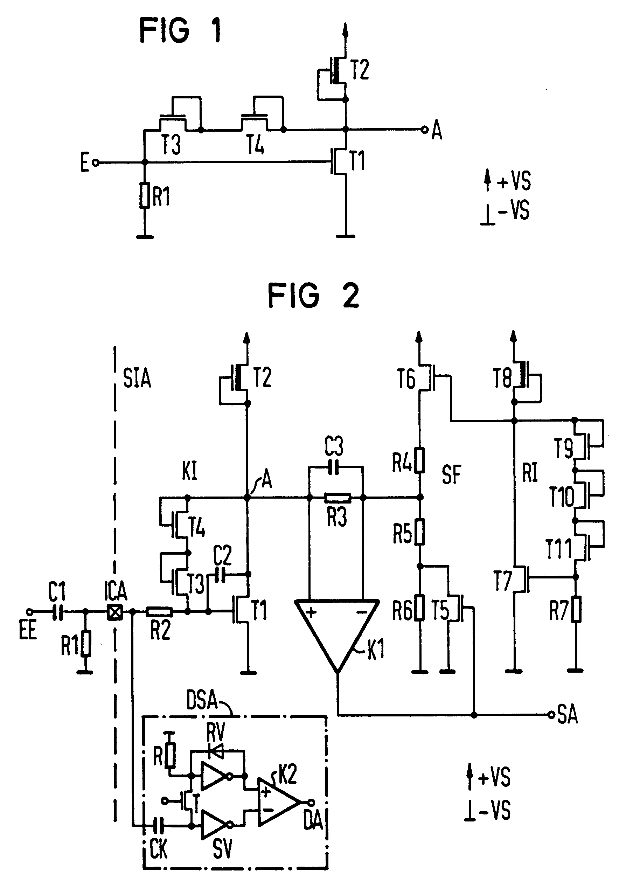

Die als Teilschaltung einer erfindungsgemäßen Schaltung ausgebildete Klemmschaltung gemäß FIG 1 besteht im Ausführungsbeispiel aus einem MOS-Inverterverstärker aus dem Transistor T1 und dem Lasttransistor T2, dessen Ausgang A über zwei als Dioden geschaltete Transistoren T3 und T4 mit dem Eingang E verbunden ist. Der Transistor T1 ist mit dem Bezugspotential -VS und der Transistor T2 mit dem Versorgungspotential +VS verbunden. Die Schaltung gemäß FIG 1 enthält weiterhin einen vom Eingang E gegen das Bezugspotential -VS geschalteten Widerstand R1, der vorzugsweise hochohmig ist und einen Ableitwiderstand gegen das Bezugspotential bildet. Sämtliche Transistoren sind als MOS-Transistoren ausgebildet.

Die Klemmschaltung gemäß FIG 1 stellten einen analogen Verstärker dar, der sich auf einen festen Arbeitspunkt einstellt. Der hochohmige Ableitwiderstand R1 am Eingang E der Schaltung versucht zunächst, am Gate des Transistors T1, d.h. am Eingang des aus den Transistoren T1 und T2 gebildeten Inverterverstärkers, den Pegel des Bezugspotentials -VS einzustellen, dem am Ausgang A ein hoher Spannungspegel entspräche. Aufgrund des dann hohen Spannungsunterschiedes zwischen dem Ausgang A und dem Eingang E fließt jedoch durch die beiden in Serie geschalteten MOS-Dioden T4 und T3, die vorzugsweise durch Feldeffekttransistoren realisiert sind, ein kräfter Ausgleichsstrom, der das Gatepotential des Transistors T1 soweit anhebt, bis die Spannungsdifferenz vom Ausgang A zum Eingang E gerade der Summe der Schwellenspannungen der beiden Dioden T4 und T3 entspricht. Die Klemmschaltung kommt so in einen stabilen Zustand, bei dem sich die Spannung am Eingang E geringfügig gegenüber der Schwellenspannung des Transistors T1 einstellt, und der Ausgangspegel etwa 2 Diodenschwellspannungen über dem Eingangspegel liegt.

Ein kapazitiv auf den Eingang E gekoppeltes periodisches Signal wie das Farbbildaustastsynchron-Signal, bildet sich am Eingang E der Klemmschaltung gemäß FIG 1 immer so ab, daß der negativste Signalpegel mit dem statischen Eingangsruhepegel zusammenfällt. Bei einer Abweichung in negativer Richtung lädt der durch die Transistoren T4 und T3 fließende Diodenausgleichsstrom die in der FIG 1 nicht eingezeichnete Eingangskoppelkapazität auf. Bei einer Abweichung in positiver Richtung entnimmt der hochohmige Ableitwiderstand R1 dem dem Eingang E vorgeschalteten Koppelkondensator langsam Kondensatorenergie, ohne vom durch die Transistoren T4 und T3 fließenden Strom korrigiert zu werden. Bei einem dem Eingang E vorgeschalteten Koppelkondensator ist dieser Lade- bzw. Entladezyklus immer aktiv, da der Ableitwiderstand R1 ständig, wenn auch in geringem Maße, Energie aus dem Koppelkondensator abführt.

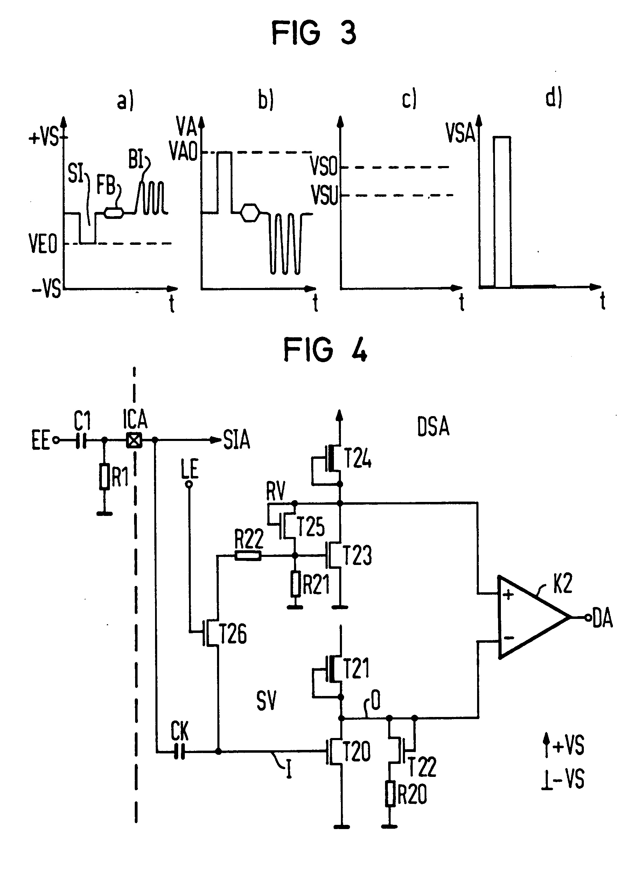

FIG 3a zeigt ein charakteristisches Farbbildaustastsynchron (FBAS)-Signal, das aus einem Synchrongemisch bzw. Synchronimpuls SI, einem Farbburst FB und der Bildinformation BI besteht und das mit einer Klemmschaltung gemäß FIG 1 auf den Eingangsruhepegel VEO als negativstem Signalpegel bezogen ist. Das auf diese Weise auf den Eingangsruhepegel geklemmte FBAS-Signal erscheint am Ausgang der Klemmschaltung gemäß FIG 3b invertiert verstärkt, wobei die Dachamplituden des verstärkten Synchrongemisches bzw. des verstärkten Synchronimpulses SI wegen des Klemmprinzips nicht über den Ausgangsruhepegel VAO am Ausgang A der Klemmschaltung ansteigen. Die erfindungsgemäße Schaltungsanordnung setzt einen minimalen Amplitudenwert der Synchronimpulse voraus, die verstärkt am Ausgang A erscheinen.

FIG 2 zeigt eine erfindungsgemäße Schaltungsanordnung mit einer detaillierten Teilschaltung einer Klemmschaltung und einer Abtrennschaltung für das Synchrongemisch. Die Schaltung gemäß FIG 2 enthält integrierfähige Schaltungsteile SIA und DSA, die durch eine gestrichelte Linie und den Anschluß ICA eines integrierten Schaltkreises von nicht integrierten Schaltungselementen aus einem Koppelkondensator C1 und dem hochohmigen Ableitwiderstand R1 getrennt ist. Die Klemmschaltung gemäß FIG 1 ist grundsätzlich in FIG 2 als Klemmschaltung KI mit den Elementen T1 bis T4 enthalten. Im Unterschied zur FIG 1 ist der Verbindungspunkt des Ausgangskreises des Transistors T3 einerseits mit dem Gate des Transistors T1 und andererseits über den Widerstand R2 und den Anschluß ICA des integrierten Schaltkreises mit dem Widerstand R1 und der Koppelkapazität C1 verbunden. Der hochohmige Ableitwiderstand R1 ist wie in FIG 1 mit dem Bezugspotential -VS und der freie Anschluß der Koppelkapazität mit dem Signaleingang EE verbunden. Als weiterer Unterschied zu FIG 1 ist zwischen dem Gate- und dem Drainanschluß des Transistors T1 eine Kapazität C2 angeordnet.

Am Anschluß ICA ist weiterhin eine Teilschaltung DSA angeschlossen, die zur Abtrennung der Videoprogrammsystem(VPS)-Daten dient. Ein MOS-Signalverstärker SV ist wechselspannungsmäßig über eine Koppelkapazität CK mit der Klemmschaltung KI verbunden, und sein Arbeitspunkt wird mit Hilfe eines MOS-Referenzverstärkers RV mit Ableitwiderstand R und einer Torschaltung T nachgeregelt. Die Ausgänge des MOS-Signal- bzw. MOS-Referenzverstärkers sind mit einem zweiten MOS-Komparator K2 verbunden. Die Teilschaltung DSA ist detailliert anhand von FIG 4 beschrieben.

Die detaillierte Teilschaltung gemäß FIG 2 enthält weiterhin einen MOS-Referenzinverter RI aus den MOS-Transistoren T7 bis T11 und dem Widerstand R7. Im Unterschied zur FIG 1 und zur Klemmschaltung KI der FIG 2 enthält der Referenzinverter RI drei mit ihren Ausgangskreisen in Serie, als Dioden geschaltete Transistoren T9 bis T11, die zwischen dem Gateanschluß des Transistors T7 und dem Ausgang der aus den Transistoren T7 und T8 gebildeten Inverterschaltung angeschlossen sind. Der Referenzinverter RI ist vorzugsweise gleich dimensioniert wie der Klemminverter KI.

Dem MOS-Referenzinverter RI ist ein Sourcefolger aus dem MOS-Transistor T6 und den drei in Serie geschalteten Widerständen R4 bis R6 nachgeschaltet, die einen ohmschen Spannungsteiler bilden. Mit dem Referenzinverter RI und dem nachgeschalteten Sourcefolger SF ist ein Ausgangspegel erzeugbar, der genügend genau dem Ausgangsruhepegel des Klemminverters KI entspricht.

Im Ausführungsbeispiel der FIG 2 wird der Ausgang A der Klemmschaltung KI bzw. des MOS-Inverterverstärkers aus T1 und T2 mit dem nicht invertierenden Eingang, der Verbindungspunkt der Widerstände R4 und R5 als Ausgang des Sourcefolgers SF mit dem invertierenden Eingang eines MOS-Komparators K1 verbunden. Zwischen den beiden Eingängen des Komparators K1 liegt die Parallelschaltung aus dem Widerstand R3 und der Kapazität C3. Der Ausgang des Komparators K1 bildet den Ausgang der detaillierten Teilschaltung gemäß FIG 2 und ist mit der Ausgangsklemme SA verbunden. Ebenfalls vom Ausgang des Komparators K1 wird ein MOS-Transistors T5 gesteuert, dessen Ausgangskreis parallel zum Widerstand R6 liegt.

Die als ohmscher Spannungsteiler aus den Widerständen R4 bis R6 gebildete Sourcefolgerlast ist so dimensioniert, daß das am invertierenden Eingang des Komparators K1 liegende Referenzpotential, das den Abtrennpegel für das am Ausgang A der Klemmschaltung KI liegende geklemmte und verstärkte FBAS-Signal festlegt, sich immer im Spannungsbereich zwischen dem maximalen Pegel des Farbburst-Signals bzw. des Bildinformations-Signals und dem minimal möglichen Pegel des Synchronimpulses SI am Ausgang A der Klemmschaltung KI befindet.

Gemäß der Ausgestaltung des Ausführungsbeispiels nach FIG 2 ist es vorteilhaft, daß der Widerstand R6 mit Hilfe des MOS-Schalters T5 überbrückbar ist, so daß dem optimalen Trennpegel eine Hysterese überlagert ist. Auch der mit Hilfe der Hysterese verwirklichte Trennpegel liegt selbstverständlich zwischen dem maximalen Farbburst- bzw. Bildinformations-Signal und dem minimal möglichen Pegel des Synchronimpulses. Der jeweils geltende Trennpegel wird vom Ausgang des Komparators K1, der den Ausgang der Klemmschaltung KI mit dem Trennpegel vergleicht, mit Hilfe des Transistors T5 gesteuert. Liegt der Ausgang SA des Komparators K1 auf hohem Potential, d.h. daß das Ausgangssignal der Klemmschaltung KI größer als der Trennpegel ist, dann wird der Trennpegel auf den unteren Hysteresewert geschaltet. Dieser ist in FIG 3c durch den Pegel VSU bezeichnet. Sobald der Komparator K1 auf ein niedrigeres Ausgangspotential umschaltet, wechselt der Trennpegel zum höheren Hysteresewert VSO gemäß FIG 3c. Auf diese Weise errreicht man, daß kleinere Signalstörungen, insbesondere in den Signalflanken, den Komparator K1 nicht umschalten lassen. Gemäß FIG 3d erscheint am Komparatorausgang SA das abgetrennte Synchrongemisch bzw. der abgetrennte Synchronimpuls mit dem Ausgangspegel VSA.

Um die Störfestigkeit der Schaltung gemäß FIG 2 zu erhöhen, ist es vorteilhaft, weitere Entstörmaßnahmen insbesondere für hochfrequente Störungen einzubauen. Gemäß der detaillierten Teilschaltung der FIG 2 ist dazu erstens eine mit Hilfe der Kapazität C2 vergrösserte Millerkapazität der Klemmschaltung KI vorgesehen, um höhere Frequenzen stärker zu bedämpfen. Zweitens ist eine kapazitive Verkopplung der beiden Komparatoreingänge des Komparators K1 mit Hilfe der Kapazität C3 vorgesehen, um für hohe Frequenzanteile eine Kopplung zwischen den beiden Komparatoreingängen zu erreichen. Zur Erhöhung der Wirksamkeit der ersten Maßnahme ist es vorteilhaft, den Widerstand R2 zwischen dem Anschluß ICA und dem Gate des Transistors T1 vorzusehen, um den Innenwiderstand der FBAS-Signalquelle aus der Sicht der Klemmschaltung KI zu erhöhen. Bei der zweiten Maßnahme wird der Kapazität C3 zwischen den Komparatoreingängen vorteilhaft der Widerstand R3 parallel geschaltet, um den frequenzabhängigen Verkopplungsgrad durch Variation der Zeitkonstanten einstellen zu können.

Die detaillierte Teilschaltung gemäß FIG 4 zeigt eine integrierfähige Schaltung DSA zur Abtrennung der Videoprogrammsystem-Daten in Zeile 16 des FBAS-Signals. Gemäß FIG 4 bzw. FIG 2 ist der Signaleingang EE über eine Koppelkapazität C1 einerseits mit dem Anschluß ICA einer integrierten Schaltung und andererseits über den Widerstand R1 mit dem Bezugspotential -VS verbunden. Dem Anschluß ICA ist die detaillierte Teilschaltung SIA gemäß FIG 2 nachgeschaltet. Ebenfalls am Anschluß ICA ist die Teilschaltung DSA gemäß FIG 4 angeschlossen, die über einen Koppelkondensator CK auf den Eingang I eines aus den MOS-Transistoren T20 und T21 gebildeten MOS-Signalverstärkers SV führt. Der Ausgang O des MOS-Signalverstärkers SV ist einerseits auf den invertierenden Eingang eines zweiten Komparators K2 und andererseits über einen als Diode geschalteten MOS-Transistor T22 und einen nachgeschalteten Widerstand R20 an das Bezugspotential -VS gelegt.

Als MOS-Referenzverstärker RV in der Datenabtrennschaltung DSA dient gemäß FIG 4 notwendigerweise ein identisch zum MOS-Signalverstärker SV dimensionierter Inverterverstärker aus den MOS-Transistoren T23 und T24, der über einen als Diode geschalteten MOS-Transistor T25 von seinem Ausgang zu seinem Eingang rückgekoppelt ist. Ebenso wie die Rückkoppeltransistoren T3, T4 und T9 bis T11 sind der Transistor T22 und der Rückkoppeltransistor T25 vorzugsweise Feldeffekttransistoren. Weiter besitzt der Referenzverstärker einen hochohmigen Ableitwiderstand R21 vom Eingang zum Bezugspotential -VS. Die Eingangs-Gatespannung des Referenzverstärkers RV wird hochohmig über den Widerstand R22 und das über den MOS-Transfertransistor T26 gebildete Nachladetor dem Gate des MOS-Signalverstärkers SV zugeführt. Der Steueranschluß des Transfertransistors T26 ist mit einer Klemme LE an eine nicht gezeichnete Logikeinheit angeschlossen, die in einer noch zu beschreibenden Weise das Nachladetor bzw. den Transistor T26 ansteuert. Auf den Verbindungspunkt des Ausgangskreises des Transistors T26 mit dem Gateanschluß des Transistors T20 erfolgt auch die kapazitive Einspeisung über die Koppelkapazität CK des bereits für die Synchronsignalgewinnung geklemmten internen FBAS-Signals. Der Ausgang des Referenzverstärkers RV ist auf den nicht invertierenden Eingang des zweiten MOS-Komparators K2 geführt, dessen Ausgang DA den Ausgangsanschluß für das abgetrennte Datensignal bildet.

Voraussetzung für die Abtrennung und Aufbereitung der Videoprogrammsystem-Daten ist die Signalklemmung des Farbbildaustastsynchron-Signals in der Klemmschaltung KI und die aus dem Synchrongemisch mit Hilfe des abgetrennten Synchronisiersignals gewonnene zeitliche Information für das Auftreten des Signals in der Zeile 16 des FBAS-Signals. Laut Spezifikation der Videoprogrammsystem-Daten liegt das Datensignal im Manchester II-Code (Biphase-Code) vor, d.h. im Mittel über jedes Bit liegt das Signal zu 50 % auf hohem und zu 50 % auf niedrigem Potential. Aufgrund dieser Tatsache wird erfindungsgemäß sehr einfach mit Hilfe der wechselspannungsgekoppelten Teilschaltung DSA eine Digitalisierung der VPS-Daten vorbereitet, indem parallel zum MOS-Signalverstärker SV der MOS-Referenzverstärker RV vorgesehen ist, der seinen eigenen Arbeitspunkt konstant hält und den des Signalverstärkers nachführt.

Das bezüglich des Arbeitspunktes des MOS-Signalverstärkers verstärkte Datensignal und der dem arithmetischen Mittel des Biphase-Codes entsprechende Arbeitsruhepunkt des Referenzverstärkers RV werden dem zweiten MOS-Komparator K2 zugeführt, der dann eine optimale Datenabtrennung gewährleistet. Dabei ist vorausgesetzt, daß die Einstellung und die Nachführung des Arbeitspunktes des MOS-Signalverstärkers SV nur dann erfolgen darf, wenn wirklich VPS-Daten zur Verstärkung anstehen. Diese Information wird logisch aus dem durch die Abtrennung des Synchrongemisches gewonnenen synchronisierten Zeitpunkt, bzw. dem FBAS-Signal abgeleitet und der aus dem MOS-Transistor T26 gebildeten Nachladetorschaltung für den Arbeitspunkt zugeführt. Die Ableitung der Information zur Öffnung des Nachladetores ist in FIG 4 nicht gezeichnet, ergibt sich aber mit Hilfe der einem Fachmann geläufigen Mittel.

Die Nachladung der Koppelkapazität CK für den Arbeitspunkt mit Hilfe der Nachladetorschaltung des Transistors T26 und der vorgeschalteten Logikeinheit LE erfolgt nur dann, wenn Daten in der Zeile 16 des FBAS-Signals erkannt worden sind oder wenn die Daten während des für sie definierten Bereichs innerhalb der Zeile 16 angenommen werden können. Mit Hilfe dieser erfindungsgemäßen Schaltungsmaßnahme wird gleichzeitig die Abspeicherung eines optimalen Arbeitspunktes des MOS-Signalverstärkers SV von einem Zeile 16-Signal bis zum nächsten Zeile 16-Signal ermöglicht. Werden Daten innerhalb eines Zeile 16-Signals eines FBAS-Signals nicht richtig erkannt, so bleibt die Arbeitspunktregelung trotzdem aktiv, obwohl gegebenenfalls nur Rauschen verstärkt wird. In jedem Fall wird auf diese Weise der Arbeitspunkt für den nächsten Abtrennzyklus vorbereitet. Mit Hilfe der erfindungsgemäßen Schaltungsanordnung werden auch halbbild- oder vollbildfrequente periodische Störungen, wie z.B. Netzbrumm, weitgehend eliminiert.

Aus Symmetriegründen werden dem MOS-Signalverstärker SV mit Hilfe der Elemente T22 und R20 die gleichen Lastverhältnisse wie dem MOS-Referenzverstärker RV angeboten, d.h. vom Ausgang des Verstärkers die Gegenkopplungsdiode und den nachgeschalteten Ableitwiderstand zum Bezugspotential -VS. Da der MOS-Signalverstärker und der MOS-Referenzverstärker statisch die gleiche Gatespannung am Eingang und ihre Ausgänge die gleichen Lastverhältnisse sehen, geben beide Teilverstärker auch den gleichen Ausgangsruhepegel ab.

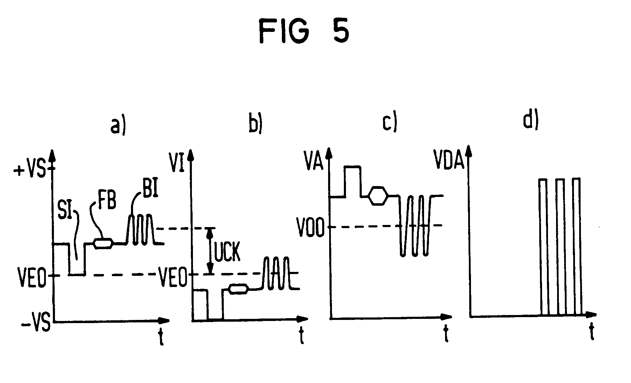

Gemäß FIG 5 sind einige charakteristische Signale aufgezeichnet. FIG 5a zeigt das geklemmte FBAS-Signal, das auf einen Eingangsruhepegel der Klemmschaltung KI bezogen ist und am Anschluß ICA der erfindungsgemäßen Schaltung abgegriffen werden kann. FIG 5b zeigt das um die Spannungsdifferenz UCK an der Koppelkapazität CK verringerte geklemmte Signal am Eingang I des MOS-Signalverstärkers SV. Dieses kapazitiv eingekoppelte Signal am Eingang des MOS-Verstärkers führt zu optimalen Auslenkungen um den Ausgangsruhepegel VOO am Ausgang O bzw. am invertierenden Eingang des zweiten MOS-Komparators K2 gemäß FIG 5c. Da der Ausgangsruhepegel des Referenzinverters dem Ausgangsruhepegel VOO entspricht, sind am Ausgang DA des zweiten MOS-Komparators K2 die abgetrennten Videoprogrammsystem-Daten in digitaler Form gemäß FIG 5d abgreifbar.

Die erfindungsgemäße Datenabtrennschaltung erlaubt es auch, Videotextdaten abzutrennen, wenn die Öffnung des Nachladetors zur Arbeitspunktnachregelung in die Videotextzeilen gelegt wird und auf die Zeit des Runin, d.h. eine gleichmäßige 1/0-Datenbitfolge zur Synchronisierung des Datentaktgenerators, begrenzt wird.

Die im Ausführungsbeispiel gemäß den FIG 1 bis 5 beschriebene erfindungsgemäße Schaltungsanordnung ist nur beispielhaft in einkanaliger N-MOS-Technologie beschrieben. Genauso vorteilhaft kann die Schaltung in komplementärer MOS-Technologie oder auch in P-MOS-Technologie realisiert werden.

## Patentansprüche

1. Integrierbare Schaltungsanordnung zur Abtrennung des Synchrongemisches und der Videoprogrammsystem(VPS)-Daten aus einem Farbbildaustastsynchron(FBAS)-Signal mit einer Klemmschaltung für das Farbbildaustastsynchron-Signal und mindestens einem Komparator zur Festlegung eines Trennpegels,
**dadurch gekennzeichnet,** daß die Klemmschaltung (T1 bis T4, R1; KI) einen MOS-Inverterverstärker (T1, T2) enthält, dessen Eingang (E) hochohmig (R1) an ein Bezugspotential (-VS) anschließbar und über als Dioden geschaltete MOS-Transistoren (T3, T4) mit dem Ausgang des MOS-Inverterverstärkers (T1, T2) verbunden ist und dessen Ausgang (A) ebenso wie der Ausgang eines MOS-Referenzinverters (RI) an je einen Eingang (+, -) eines ersten MOS-Komparators (K1) gelegt ist, dessen Ausgang (SA) das Synchrongemisch liefert und daß wechselspannungsmäßig ein MOS-Signalverstärker (SV) mit dem Eingang (E) des MOS-Inverterverstärkers (T1, T2) der Klemmschaltung (T1 bis T4, R1; KI) gekoppelt ist, mit dem ein MOS-Referenzverstärker (RV) zur Arbeitspunktnachführung verbunden ist und der Ausgang (O) des MOS-Signalverstärkers (SV) ebenso wie der Ausgang des MOS-Referenzverstärkers (RV) an je einen Eingang (+, -) eines zweiten MOS-Komparators (K2) gelegt ist, dessen Ausgang (DA) die Videoprogrammsystem (VPS)-Daten liefert.

2. Anordnung nach Anspruch 1, **dadurch gekennzeichnet,** daß der Eingang des MOS-Referenzinverters (RI) hochohmig (R7) mit dem Bezugspotential (-VS) und über als Dioden geschaltete MOS-Iransistoren (T9) bis (T11) mit dem Ausgang des MOS-Referenzinverters (RI) verbunden ist.

3. Anordnung nach Anspruch 1 oder 2, **dadurch gekennzeichnet,** daß die Elemente des MOS-Referenzinverters (RI) und der Klemmschaltung (T1 bis T4, R1; KI) gleich dimensioniert sind.

4. Anordnung nach Anspruch 1 bis 3, **dadurch gekennzeichnet,** daß dem MOS-Referenzinverter (RI) ein MOS-Sourcefolger (SF) nachgeschaltet ist, dessen Sourcefolgerlast als ohmscher Spannungsteiler (R4, bis R6) ausgebildet ist.

5. Anordnung nach Anspruch 1 bis 4, **dadurch gekennzeichnet,** daß ein Widerstand (R6) des ohmschen Spannungsteilers (R4 bis R6) des MOS-Sourcefolgers (SF) mit einem MOS-Schalter (T5) überbrückbar ist, der vom Ausgang (SA) des ersten MOS-Komparators (K1) gesteuert wird.

6. Anordnung nach Anspruch 1 bis 5, **dadurch gekennzeichnet,** daß zwischen Eingang (E) und Ausgang (A) der Klemmschaltung (T1 bis T4, R1; KI) und zwischen den Eingängen des ersten MOS-Komparators (K1) jeweils eine Kapazität (C2, C3) vorgesehen ist.

7. Anordnung nach Anspruch 1 bis 6, **dadurch gekennzeichnet,** daß eingangsseitig der Klemmschaltung (T1 bis T4; KI) ein Reihenwiderstand (R2) und dem ersten MOS-Komparator (K1) ein Parallelwiderstand (R3) vorgeschaltet ist.

8. Anordnung nach einem der Ansprüche 1 bis 7, **dadurch gekennzeichnet,** daß der MOS-Signalverstärker (SV) und der MOS-Referenzverstärker (RV) über eine MOS-Torschaltung (T26) verbunden sind, die mit Hilfe einer Logikschaltung während eines für Datensignale definierten Bereichs des Fabbildaustastsynchron(FBAS)-Signals öffnet.

9. Anordnung nach Anspruch 1 bis 8, **dadurch gekennzeichnet,** daß der MOS-Signalverstärker (SV) und der MOS-Referenzverstärker (RV) jeweils die gleiche Last (T22, R20, T25, R21) aufweisen.

10. Anordnung nach Anspruch 1 bis 9, **dadurch gekennzeichnet,** daß der MOS-Referenzverstärker (RV) invertierend arbeitet und sein Eingang hochohmig (R21, R22) sowohl mit dem Bezugspotential (-VS) als auch über die MOS-Torschaltung (T26) mit dem Eingang (E) des MOS-Signalverstärkers (SV) und über wenigstens einen als Diode geschalteten MOS-Transistor (T25) mit seinem Ausgang verbunden ist.

## Claims

1. Integrated circuit arrangement for separating the composite synchronous signal and the video program system (VPS) data from a composite colour signal, having a clamp circuit for the composite colour signal and at least one comparator for determining a separation level, characterised in that the clamp circuit (T1 to T4, R1; KI) contains a MOS inverter amplifier (T1, T2), the input (E) of which can be connected in a high-resistance manner (R1) to a reference potential (-VS) and is connected to the output of the MOS inverter amplifier (T1, T2) via MOS transistors (T3, T4) switched as diodes, and the output (A) of which, like the output of a MOS reference inverter (RI), is connected in each case to one input (+, -) of a first MOS comparator (K1), the output (SA) of which supplies the composite synchronous signal, and in that in terms of alternating voltage, a MOS signal amplifier (SV) is coupled to the input (E) of the MOS inverter amplifier (T1, T2) of the clamp circuit (T1 to T4, R1; KI) to which a MOS reference amplifier (RV) is connected for adjusting the working point, and the output (O) of the MOS signal amplifier (SV), like the output of the MOS reference amplifier (RV), is applied in each case to an input (+, -) of a second MOS comparator (K2), the output (DA) of which supplies the video program system (VPS) data.

2. Arrangement according to Claim 1, characterised in that the input of the MOS reference inverter (RI) is connected in a high-resistance manner (R7) to the reference potential (-VS), and to the output of the MOS reference inverter (RI) via MOS transistors (T9) to (T11) switched as diodes.

3. Arrangement according to Claim 1 or 2, characterised in that the elements of the MOS reference inverter (RI) and of the clamp circuit (T1 to T4, R1; KI) have identical dimensions.

4. Arrangement according to Claim 1 to 3, characterised in that connected downstream of the MOS reference inverter (RI) is a MOS source follower (SF), the source follower load of which is designed as an ohmic voltage divider (R4, to R6).

5. Arrangement according to Claim 1 to 4, characterised in that a resistor (R6) of the ohmic voltage divider (R4 to R6) of the MOS source follower (SF) can be bridged by a MOS switch (T5) controlled by the output (SA) of the first MOS comparator (K1).

6. Arrangement according to Claim 1 to 5, characterised in that a capacitor (C2, C3) is provided in each case between input (E) and output (A) of the clamp circuit (T1 to T4, R1; KI) and between the inputs of the first MOS comparator (K1).

7. Arrangement according to Claim 1 to 6, characterised in that on the input side, connected upstream of the clamp circuit (T1 to T4; KI) is a series resistor (R2) and upstream of the first MOS comparator (K1) is a parallel resistor (R3).

8. Arrangement according to one of Claims 1 to 7, characterised in that the MOS signal amplifier (SV) and the MOS reference amplifier (RV) are connected via a MOS gate circuit (T26) which, with the aid of a logic circuit, opens during a band of the composite colour signal defined for data signals.

9. Arrangement according to Claim 1 to 8, characterised in that the MOS signal amplifier (SV) and the MOS reference amplifier (RV) have the same load (T22, R20, T25, R21) in each case.

10. Arrangement according to Claim 1 to 9, characterised in that the MOS reference amplifier (RV) operates in an inverting manner and its input is connected in a high-resistance manner (R21, R22) both to the reference potential (-VS) and also via the MOS gate circuit (T26) to the input (E) of the MOS signal amplifier (SV), and via at least one MOS transistor (T25) switched as a diode to its output.

## Revendications

1. Circuit intégrable pour séparer le mélange synchrone et les données d'un système de programme vidéo (VPS), d'un signal chromatique complet (FBAS), comportant un circuit de blocage pour le signal chromatique complet et au moins un comparateur pour déterminer un niveau de séparation, caractérisé en ce que le circuit de blocage (T1 à T4, R1; KI) comporte un amplificateur inverseur MOS (T1, T2), dont l'entrée (E) est susceptible, par voie fortement ohmique (R1), d'être portée à un potentiel de référence (-VS) et est reliée, par l'intermédiaire de transistors MOS (T3, T4) montés en diodes, à la sortie de l'amplificateur inverseur MOS (T1, T2), et dont la sortie (A) est reliée, de même que l'entrée d'un inverseur de référence MOS (RI), à respectivement une des entrée (+, -) d'un premier comparateur MOS (K1), dont la sortie (SA) fournit le mélange synchrone, et en ce qu'un amplificateur de signaux MOS (SV) est couplé, en tension alternative, à l'entrée (E) de l'amplificateur inverseur MOS (T1, T2) du circuit de blocage (T1 à T4, R1; KI), auquel est relié un amplificateur de référence MOS (RV) pour l'asservissement du point de fonctionnement, la sortie (O) de l'amplificateur de signal MOS (SV) étant reliée, de même que la sortie de l'amplificateur de référence MOS (RV), à respectivement une des entrées (+, -) d'un deuxième comparateur MOS (K2), dont la sortie (DA) fournit les données du système de programme vidéo (VPS).

2. Circuit suivant la revendication 1, caractérisé en ce que l'entrée de l'inverseur de référence MOS (RI) est placée, par voie fortement ohmique (R7), au potentiel de référence (-VS) et est reliée à la sortie de l'inverseur de référence MOS (RI), par l'intermédiaire de transistors MOS (T9) à (T11) montés en diodes.

3. Circuit suivant la revendication 1 ou 2, caractérisé en ce que les éléments de l'inverseur de référence MOS (RI) et du circuit de blocage (T1 à T4, R1; KI) sont dimensionnés de la même manière.

4. Circuit suivant l'une des revendications 1 à 3, caractérisé en ce qu'à l'inverseur de référence MOS (RI), est reliée en aval un montage MOS en sources communes (SF) dont la charge est formée comme diviseur ohmique de tension (R4 à R6).

5. Circuit suivant l'une des revendications 1 à 4, caractérisé en ce qu'une résistance (R6) du diviseur ohmique de tension (R4 à R6) du montage MOS en sources communes (SF), est susceptible d'être shuntée par un interrupteur MOS (T5), qui est commandé par la sortie (SA) du premier comparateur MOS (K1).

6. Circuit suivant l'une des revendications 1 à 5, caractérisé en ce qu'il est prévu une capacité (C2, C3) respectivement entre l'entrée (E) et la sortie (A) du circuit de blocage (T1 à T4, R1; KI) et entre les entrées du premier comparateur MOS (K1).

7. Circuit suivant l'une des revendications 1 à 6, caractérisé en ce qu'une résistance série (R2) est montée en amont, côté entrée du circuit de blocage (T1 à T4; KI) et une résistance parallèle (R3) est montée en amont du premier comparateur MOS (K1).

8. Circuit suivant l'une des revendications 1 à 7, caractérisé en ce que l'amplificateur de signaux MOS (SV) et l'amplificateur de référence MOS (RV) sont reliés ensemble par l'intermédiaire d'un circuit de porte MOS (T26), qui, à l'aide d'un circuit logique, devient passante, pendant une plage, définie pour les signaux de données, du signal chromatique complet (FBAS).

9. Circuit suivant l'une des revendications 1 à 8, caractérisé en ce que l'amplificateur de signaux MOS (SV) et l'amplificateur de référence MOS (RV) possèdent respectivement la même charge (T22, R20, T25, R21).

10. Circuit suivant l'une des revendications 1 à 9, caractérisé en ce que l'amplificateur de référence MOS (RV) travaille en inverseur et son entrée est reliée, par voie fortement ohmique (R21, R22), aussi bien au potentiel de référence (VS), qu'à l'entrée (E) de l'amplificateur de signal MOS (SV), par l'intermédiaire du circuit de porte MOS (T26), et à sa sortie, par l'intermédiaire d'au moins un transistor MOS (T25) monté en diode.
